# EUROPÄISCHE PATENTANMELDUNG

(11) **EP 2 292 939 A2**
(43) Veröffentlichungstag der Anmeldung: **09.03.2011**
(21) Anmeldenummer: 10174710.3
(22) Anmeldetag: 31.08.2010
(51) Int. Cl.: F16B 25/00

(54) **Betonschraube**

(30) Priorität: 07.09.2009 DE 102009041877
(71) Anmelder: SWG Schraubenwerk Gaisbach GmbH, 74638 Waldenburg (DE)
(72) Erfinder: Wimmer, Alois, 74545, Michelfeld (DE); Stiebitz, Günter, 74638, Waldenburg (DE)
(74) Vertreter: Patentanwälte Ruff, Wilhelm, Beier, Dauster & Partner

(57) **Zusammenfassung**

Es wird eine für hartes Material bestimmte gewindeformende Schraube vorgeschlagen, deren Gewinde in einem Einformbereich (4) eine Gewindekante bildet, die gegenüber der Mantelfläche eines Kreiszylinders an mehreren Stellen nach innen abweicht, so dass während eines Umlaufs der Gewindekante mehrere Maxima und Minima ihres Abstands von der Längsachse der Schraube gegeben sind. Das gleiche gilt für den Querschnitt des Schafts (2), der ebenfalls Maxima und Minima des Abweichens seiner Kontur von der Längsachse der Schraube bildet. Dadurch lässt sich ein verbessertes Einformen des Gewindes im Untergrund ohne die Gefahr des Ausbrechens des Betons oder Mauerwerks erreichen.

## Beschreibung

Die Erfindung betrifft eine Schraube zum Einschrauben in harten Untergrund, beispielsweise Beton, Mauerwerk oder dergleichen. Im Folgenden wird diese Art Schraube als Betonschraube bezeichnet.

Es ist bereits eine gewindeformende Schraube dieser Art bekannt (EP 62279). Bei Schrauben dieser Art, die in ein vorgebohrtes Loch eingeschraubt werden, ist ein bestimmtes Verhältnis von Außendurchmesser der Gewindekante und Kerndurchmesser des Schraubenschafts vorhanden.

Die bekannten Schrauben dieser Art haben einen Schaftquerschnitt, der kreisförmig ist, und die Gewindekante des Schraubengewindes liegt, von Kerben zur Erleichterung des Abführens von Gesteinsmehl beziehungsweise gelöstem Beton abgesehen, auf einer Schraubenlinie, die in der Mantelfläche eines Kreiszylinders liegt.

Der Erfindung liegt die Aufgabe zu Grunde, eine Schraube so auszugestalten, dass sie das Gewinde in dem vorgebohrten Loch gut einformen lässt und dass die Gefahr des Ausbrechens des Betons verringert wird. Zur Lösung dieser Aufgabe schlägt die Erfindung eine Schraube mit den im Anspruch 1 genannten Merkmalen vor. Weiterbildungen der Erfindung sind Gegenstand von Unteransprüchen.

Die Erfindung verwendet die Erkenntnis, dass der vordere Bereich der Schraube stärker an der Bildung des Gewindes beteiligt ist als der spätere Bereich, und gestaltet diesen vorderen Einformbereich in einer Weise, die das Einformen des Gewindes ohne die Gefahr eines Ausbrechens des Mauerwerks beziehungsweise des Betons erleichtert. Hierzu verwendet sie eine Geometrie, bei der die Gewindekante des Gewindes einen von der Längsachse der Schraube abnehmenden und wieder zunehmenden Abstand aufweist.

Der Einformbereich, in dem die Gewindekante die erwähnte Ausformung aufweist, liegt beispielsweise bei dem Dreifachen der Steigung.

In Weiterbildung der Erfindung kann vorgesehen sein, dass die spezielle Art der Ausbildung der Gewindekante sich auch in dem an den Einformbereich anschließenden Abschnitts des Schraubenschafts fortsetzt, gegebenenfalls über die gesamte Länge des Schraubenschafts, soweit der Schraubenschaft ein Gewinde aufweist. Gegebenenfalls kann in diesem Bereich die Abweichung von der Kreisform auch geringer sein als im Einformbereich.

Erfindungsgemäß kann aber ebenfalls vorgesehen sein, dass in dem sich an den Einformbereich anschließenden Abschnitt des Schraubenschafts der Abstand der Gewindekante von der Längsachse der Schraube während eines Umlaufs konstant ist, die Gewindekante also auf einer Schraubenlinie liegt, die in der Mantelfläche eines Kreiszylinders verläuft.

In nochmaliger Weiterbildung der Erfindung kann vorgesehen sein, dass die Gewindekante längs einer kontinuierlichen knickfreien Linie verläuft. Die Gewindeflanke bildet also in diesem Fall keine scharfen Knicke oder Ecken, sondern verläuft immer abgerundet. Dies ist im Einformbereich deswegen möglich, da hier das Einformen durch den zunehmenden und abnehmenden Abstand der Gewindekante von der Längsachse unterstützt wird.

Es ist aber ebenfalls möglich und wird von der Erfindung vorgeschlagen, dass die Gewindekante im Einformbereich Ecken aufweisen kann. Solche Ecken bilden durchaus deutliche Vorsprünge, die ähnlich wie Schneidzähne wirken können. Eine solche Ausbildung der Gewindekante ist allerdings nur Einformbereich sinnvoll.

In nochmaliger Weiterbildung der Erfindung kann vorgesehen sein, dass die Gewindekante des Betongewindes im Einformbereich abschnittsweise geradlinig verläuft. Dabei können die Ecken sowohl durch abgerundete Abschnitte als auch durch Knicke verbunden sein.

In nochmaliger Weiterbildung der Erfindung kann vorgesehen sein, dass die Gewindekante nicht nur Ecken aufweist, sondern deutliche Vorsprünge, die auch zahnartig ausgebildet sein können. Derartige zahnartige Vorsprünge können sowohl bei geradlinigen Abschnitten als auch bei gekrümmten Abschnitten der Gewindekante vorgesehen sein. Solche zahnartigen Vorsprünge können bei der Einformung des Gewindes in der Wand des Bohrlochs ebenfalls unterstützend mitwirken.

Die Anzahl der Minima und Maxima des Abstands der Gewindekante von der Längsachse der Schraube pro Umlauf kann in einem Bereich zwischen drei und 12 liegen, wobei die Zahl auch von dem Durchmesser der Schraube abhängen kann. Bei kleineren Durchmessern ist die Zahl der Maxima und Minima eher kleiner als bei einem größeren Durchmesser.

Die Erfindung schlägt in Weiterbildung vor, dass auch der Schraubenschaft mindestens in dem Einformbereich einen von der Kreisform abweichenden Querschnitt aufweisen kann, wobei sich auch hier der Abstand der Kontur des Querschnitts von der Längsachse der Schraube zwischen einem Maximum und einem Minimum ändert.

Insbesondere kann vorgesehen sein, dass es zwischen drei und fünf Maxima und Minima des Abweichens gibt.

Dieses Abweichen, insbesondere mit drei Maxima und Minima, kann sich beispielsweise über die gesamte Länge des Schraubenschafts fortsetzen.

Es ist aber ebenfalls möglich, dass der Schraubenschaft in dem sich an den Abschnitt mit dem von der Kreisform abweichenden Querschnitt anschließenden Abschnitt einen Kreisquerschnitt aufweist.

Es wurde bereits erwähnt, dass die Gewindekante des Gewindes so ausgebildet sein kann, dass sie zahnartig Vorsprünge aufweist.

Erfindungsgemäß kann in Weiterbildung ebenfalls vorgesehen sein, dass die Gewindeflanke Stufen bildet, die so orientiert sind, dass die Vorderkante der Stufe in Einschraubrichtung gerichtet ist, um auf diese Weise ebenfalls eine Verbesserung der Einformleistung zu ermöglichen.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: perspektivisch die Ansicht einer von der Erfindung vorge- schlagenen Betonschraube;
- Figur 2: die Seitenansicht nur des Schafts einer Betonschraube ei- ner ersten Ausführungsform;
- Figur 3: einen Querschnitt durch die Schraube der Figur 2 längs Li- nie III-III;
- Figur 4: einen Querschnitt durch die Schraube der Figur 2 längs Li- nie IV-IV in Figur 2;
- Figur 5: eine der Figur 2 entsprechende Darstellung einer Schraube bei einer zweiten Ausführungsform;
- Figur 6: einen Querschnitt längs Linie VI-VI in Figur 5;
- Figur 7: einen Querschnitt durch die Schraube der Figur 5 längs Li- nie VII-VII;
- Figur 8: eine Seitenansicht eines Schraubenschafts einer dritten Ausführungsform;
- Figur 9: einen Querschnitt längs Linie IX-IX in Figur 8;
- Figur 10: einen Querschnitt durch die Schraube der Figur 8 längs Li- nie X-X;
- Figur 11: eine Seitenansicht eines Schraubenschafts einer vierten Ausführungsform;
- Figur 12: einen Querschnitt längs Linie XII-XII in Figur 11;
- Figur 13: einen Querschnitt durch die Schraube der Figur 11 längs Linie XIII-XIII;
- Figur 14: perspektivisch einen Ausschnitt aus einem Gewindegang;
- Figur 15: perspektivisch einen Ausschnitt aus einem Gewindegang bei einer anderen Ausführungsform;
- Figur 16: einen schematisierten Querschnitt durch eine Schraube.

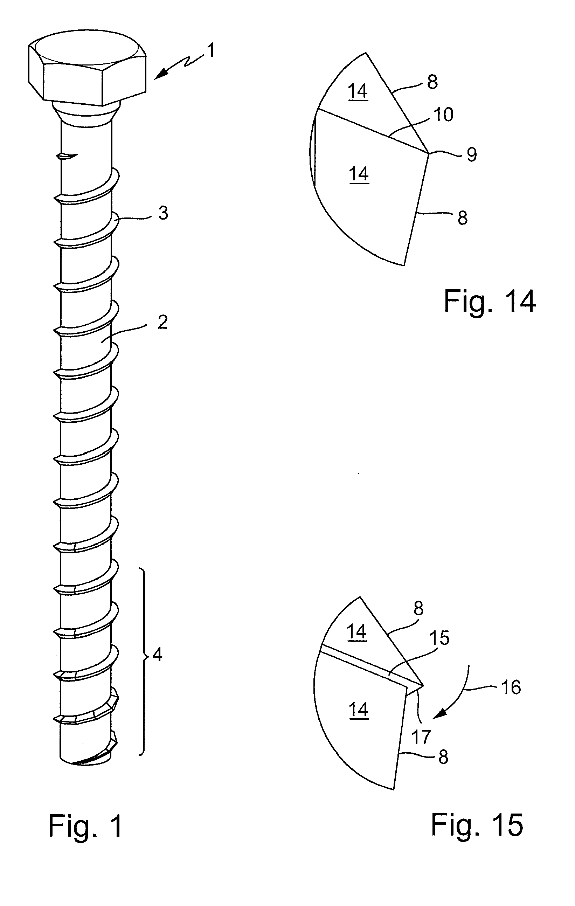

In Figur 1 ist eine Schraube in einer perspektivischen Ansicht dargestellt, wie sie von der Erfindung vorgeschlagen wird. Die Schraube enthält einen Schraubenkopf 1, im dargestellten Beispiel mit einem sechskantigen Umfang. Dieser sechskantige Umfang bildet gleichzeitig eine Ausbildung zum Angreifen mit einem Schraubenschlüssel oder einem sonstigen Werkzeug. Der Schraubenkopf 1 ist an dem einen Ende eines Schraubenschafts 2 angebracht, über den sich ein Gewinde 3 erstreckt. Zwischen den einzelnen Gängen des Gewindes 3 ist der Schraubenschaft 2 sichtbar. An dem dem Schraubenkopf 1 abgewandten Ende des Schraubenschafts 2 ist ein Einformbereich 4 gebildet, der sich etwa über 1/4 bis 1/3 der Länge des Schraubenschafts 2 erstreckt. Das vordere Ende der Schraube ist stumpf ausgebildet.

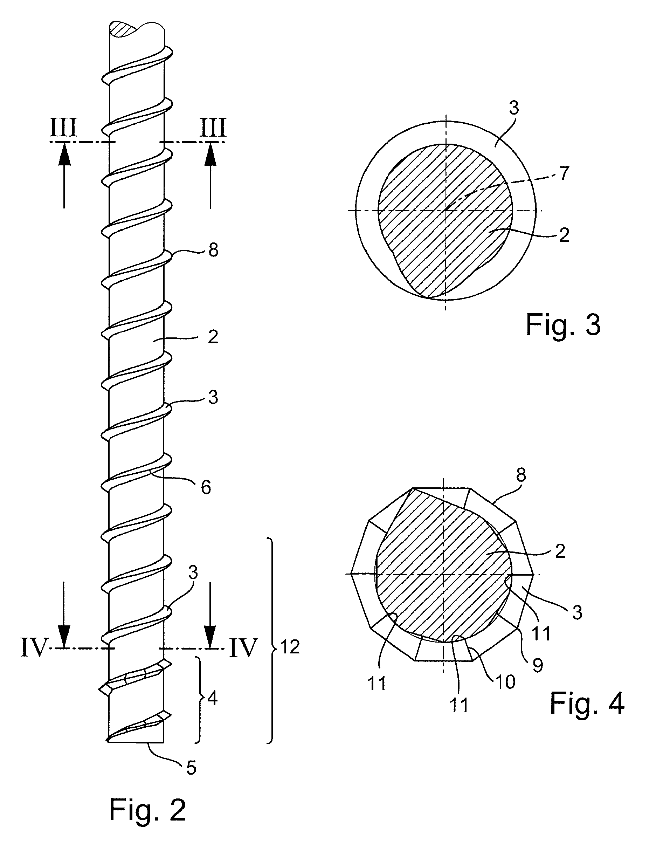

Einzelheiten zu der Schraube sind in den folgenden Figuren dargestellt. Es wird jetzt auf die Figur 2 Bezug genommen. Ganz am vorderen Ende 5 der Schraube beginnt das Gewinde 3 mit einer Gewindehöhe von praktisch null und nimmt dann innerhalb eines kurzen Bereichs die normale Gewindehöhe auf. Das Gewinde bildet in diesem Bereich Abschnitte mit einer geradlinigen Gewindekante. Nach etwa 2 bis 3 Windungen geht das Gewinde 3 dann in ein normales Gewinde mit einer kontinuierlich verlaufenden Gewindekante 6 über.

Figur 3 zeigt einen Querschnitt durch die Schraube der Figur zwei längs Linie III-III. Es ist hier zu sehen, dass der Querschnitt durch den Schraubenschaft 2 geringfügig von einer Kreisform abweicht. Der Abstand zwischen der Schraubenlängsachse 7 und der Kontur des Querschnitts hat drei Maxima und drei zwischen diesen liegende Minima.

Das gleiche gilt für das Gewinde drei, dessen Gewindekante 8 von der Längsachse 7 der Schraube einen Abstand aufweist, der sich innerhalb eines Umlaufs, der in Figur 3 dargestellt ist, zwischen einem Mindestabstand und einem Maximalabstand zu- und abnehmend verändert. Sinnvollerweise stimmt die Stelle, wo die Gewindekante 8 den maximalen Abstand von der Längsachse 7 der Schraube aufweist, mit der Stelle überein, wo auch die Kontur des Querschnitts durch die Schraube ihren maximalen Abstand von der Längsachse 7 der Schraube aufweist.

Dieser Querschnitt, der in Figur 3 dargestellt ist, gilt in dem in Figur 1 und 2 oberen Bereich der Schraube, also den Teil der Schraube, der näher am Schraubenkopf 1 angeordnet ist.

Im unteren Bereich der Schraube, also dem Einformbereich 4, ist der Querschnitt durch die Schraube in Figur 4 dargestellt. Es ist hier zu sehen, dass das Gewinde 3 eine Gewindekante 8 bildet, die aus insgesamt 10 geradlinig verlaufenden Abschnitten besteht, die sich dann in einer Ecke 9 treffen. Dies gilt für die Draufsicht entsprechend dem Schnitt der Figur 4. Zwischen den einzelnen Bereichen des Gewindes 3, die jeweils durch einen geradlinig verlaufenden Abschnitt der Gewindekante 8 begrenzt sind, wird dadurch auch eine in der Gewindeflanke liegende Kante 10 gebildet.

Soweit ist der Verlauf des Gewindes in dem vorderen Bereich dargestellt. Der Querschnitt durch den Schraubenschaft 2 verläuft aber geringfügig anders. Der Querschnitt verläuft wiederum von einer Kreisform abweichend, hat aber in diesem Bereich fünf Maxima und fünf zwischen diesen liegende Minima des Abstands der Kontur des Schafts von der Längsachse 7. Einem Maximum des Abstands fällt jeweils mit jeder zweiten Kante 10 zwischen zwei Gewindeabschnitten zusammen. Angedeutet ist dies beim Bezugszeichen 11.

Dieser mit fünf Maxima versehene Querschnitt des Schraubenschafts 2 ist über einen größeren Teil des Schraubenschafts 2 vorhanden als dies dem Einformbereich 4 entspricht. Dieser Bereich ist in Figur 2 mit dem Bezugszeichen 12 gekennzeichnet.

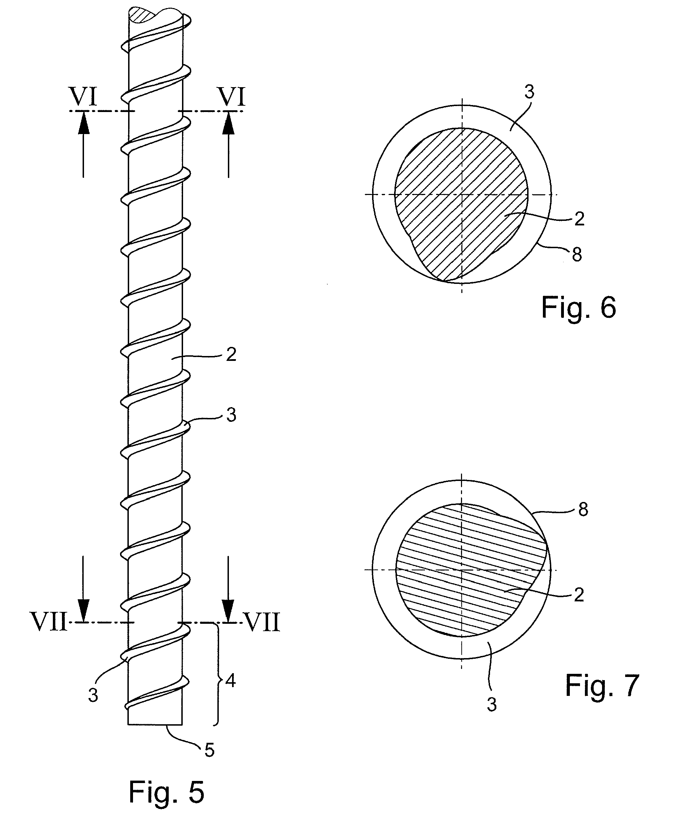

Die Figur 5 zeigt eine der Figur 2 entsprechende Darstellung bei einer geänderten Ausführungsform. Hier weist das Betongewinde 3 im Einformbereich die Form auf, die es bei der vorhergehenden Ausführungsform nur in dem sich an den Einformbereich anschließenden oberen Bereich hatte. Daher ist der in Figur 7 dargestellte Schnitt durch den Einformbereich 4 der Ausführungsform nach Figur 5 im Wesentlichen mit dem Schnitt der Figur 3 identisch.

In dem sich an den Einformbereich 4 anschließenden weiteren Bereich der Ausführungsform nach den Figuren 5 bis 7 weist der Schaft 2 der Schraube die Querschnittsform eines Kreises auf. Das Gewinde 3 bildet mit seiner Gewindekante 8 eine Schraubenlinie, die also in der Mantelfläche eines geraden Kreiszylinders liegt. Anders ausgedrückt ist hier der Einformbereich 4 trilobular, während der Restbereich kreiszylinderförmig ausgebildet ist.

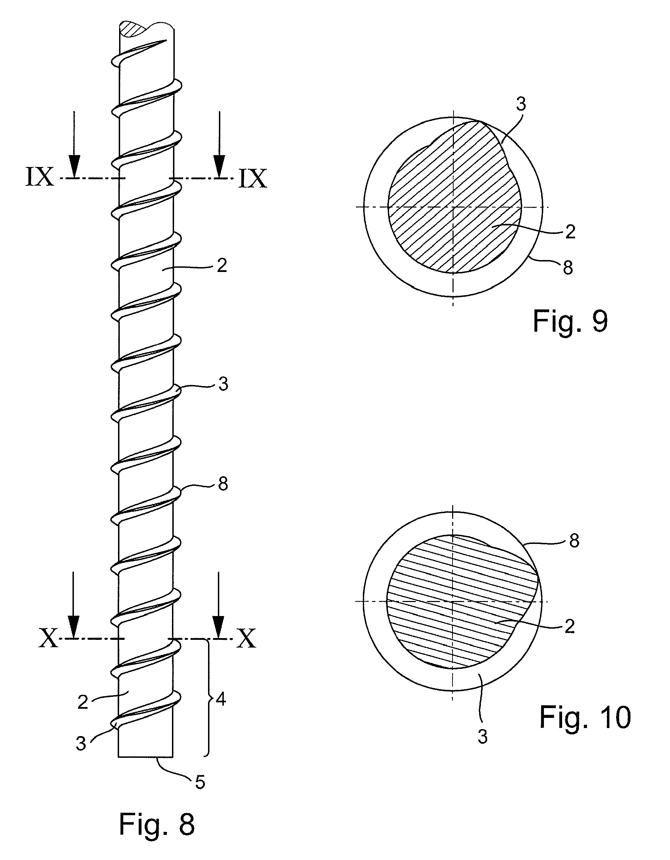

Die weitere Ausführungsform in Figur 8 bis Figur 10 entspricht einer Kombination des Einformbereichs der Figur 5 mit dem weiteren Bereich des Schafts 2 der Ausführungsform nach Figur 2. Anders ausgedrückt, weist hier der Schaft 2 im Einformbereich 4 und im weiteren Bereich einen trilobularen Querschnitt ähnlich Figur 3 auf, während das Gewinde 3 über die gesamte Länge des Schafts 2 ebenfalls mit seiner Gewindekante einer trilobularen Projektion folgt. Daher sind die Schnitte der Figur 9 und Figur 10 identisch.

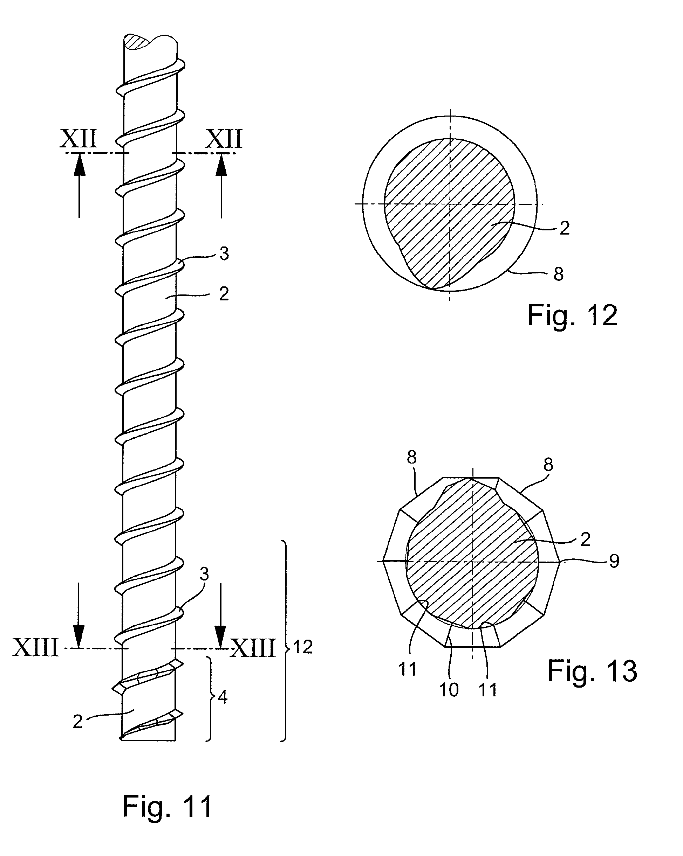

Nun zu der Ausführungsform, die in den Figuren 11 bis Figur 13 dargestellt ist. In dem Einformbereich 4 weist das Gewinde 3 eine Form auf, die der Ausführungsform nach Figur 2 bis Figur 4 entspricht. Daher ist der Querschnitt der Figur 13 den Querschnitt der Figur 4 ähnlich. Auch der Schaft 2 weist einen Querschnitt auf, der dem Querschnitt der Figur 4 entspricht. Wiederum enthält der Querschnitt des Schafts 2 im Einformbereich insgesamt fünf Stellen 11 maximaler Ausdehnung.

Wie man der Seitenansicht der Figur 11 entnehmen kann, geht die Form des Gewindes 3 am Ende des Einformbereichs 4 wieder in ein normales Gewinde über, während der Querschnitt des Schafts 2 an dieser Stelle noch seine abgerundet fünfkantige Form beibehält. Erst am Ende des Übergangsabschnitts 12 geht der Querschnitt des Schafts 2 in eine kreisrunde Form über, entsprechend der Ausführungsform nach Figur 5.

Bislang wurde bei dem Betongewinde 3, das sich um den Schaft 2 der Schraube herum erstreckt, nur der Verlauf der Gewindekante 8 näher erläutert. Abgesehen von den in der Draufsicht zu sehenden Ecken 9 verläuft bei den bisher dargestellten Ausführungsformen die Gewindekante als Linie. Dies kann man auch aus der perspektivischen Darstellung der Figur 14 entnehmen. Hier ist eine Ecke 9 der Gewindekante 8 zwischen zwei geradlinig verlaufenden Abschnitten dargestellt. Dies entspricht dem Gewinde, wie es in Figur 2 und Figur 11 im Einformbereich 4 dargestellt ist. Die Gewindeflanke 14 bildet dabei Abschnitte, die über die Kante 10 ineinander übergehen.

Es ist aber ebenfalls möglich, und hierzu wird auf die Figur 15 verwiesen, dass die Gewindeflanke einzelne Abschnitte aufweist, die durch eine Stufe 15 voneinander getrennt sind. Diese Stufe 15 zeigt in Einschraubrichtung bei einem Rechtsgewinde, angedeutet durch den Pfeil 16 in Figur 15, nach vorne. Gleichzeitig wird auch in der Gewindekante 8 ein Vorsprung 17 gebildet, der eine Art Zahn bildet. Auch dieser Zahn ist im Einschraubrichtung nach vorne gerichtet.

Solche Stufen 15, wie sie in Figur 15 dargestellt sind, können auch dann vorhanden sein, wenn die Gewindekante 8 keine Ecken oder Knicke bildet, sondern gebogen verläuft.

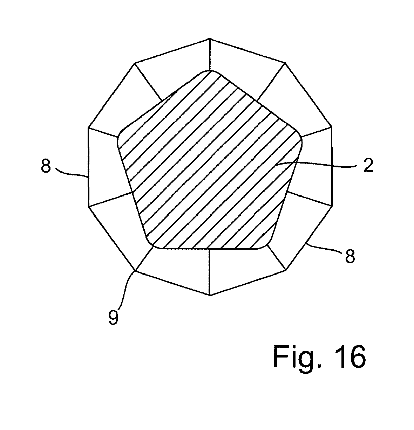

Die Figur 16 zeigt nochmals in einer übertrieben deutlichen Darstellung einen Querschnitt durch eine Schraube ähnlich der Figur 13. Hier ist deutlicher als in Figur 13 zu sehen, dass der Schaft einen fünfeckigen Querschnitt aufweist, natürlich mit abgerundeten Ecken. Dies bedeutet, dass der Abstand der Kontur des Querschnitts des Schraubenschafts 2 sich während eines Umlaufs insgesamt fünfmal zwischen einem Minimum und einem Maximum verändert. Der Abstand der Kontur weist also fünf Minima und fünf Maxima auf. Zwischen den abgerundeten Stellen maximaler Ausdehnung verläuft die Kontur geradlinig.

Das auf diesen Schaft 2 auf gewalzte Gewinde 3 weist eine Gewindekante 8 auf, die aus zehn gradlinigen Abschnitten besteht, die jeweils durch einen Knick 9 miteinander verbunden sind. Jeder zweite Knick 9 liegt in Umfangsrichtung deckungsgleich mit einer abgerundeten Ecke des Schaftquerschnitts.

Ein solcher Schaft mit dieser abgerundet fünfeckigen Form lässt sich durch Walzen einfacher herstellen, so dass sich der Aufwand beim Walzen verringert. Es hat sich herausgestellt, dass auch das Einschrauben einer solchen Schraube wegen der Form der Gewindekante 8 leichter geschieht, ohne dass die Gefahr des Ausbrechens bei hartem Material auftritt. Bei zu starkem Drücken der Gewindeform kann es zu Ausbrüchen des Betons und daher zum Ausreißen der Schraube kommen. Dies wird durch die dargestellte und beschriebene Form sowohl des Schraubenschafts als auch des Verlaufs der Gewindekante verhindert.

## Patentansprüche

1. Betonschraube, mit
1.1 einem an ihrem einen Ende angeordneten eine Antriebsausbildung aufweisenden Schraubenkopf (1),
1.2 einem Schraubenschaft (2), der
1.2.1 an dem dem Schraubenkopf (1) abgewandten Ende einen Einformbereich (4) aufweist, sowie mit
1.3 einem Betongewinde (3) mit einer Gewindekante (8),
1.4 deren Abstand innerhalb des Einformbereichs (4) von der Längsachse (7) der Schraube während eines Umlaufs sich zwischen einem Maximum und einem Minimum ändert.

2. Betonschraube nach Anspruch 1, bei der in dem sich an den Einformbereich (4) anschließenden Abschnitt des Schraubenschafts (2) der Abstand der Gewindekante (8) von der Längsachse (7) der Schraube während eines Umlaufs sich zwischen einem Maximum und einem Minimum ändert.

3. Betonschraube nach Anspruch 1, bei der in dem sich an den Einformbereich (4) anschließenden Abschnitt des Schraubenschafts (2) der Abstand der Gewindekante (8) von der Längsachse (7) der Schraube während eines Umlaufs konstant ist.

4. Betonschraube nach einem der vorhergehenden Ansprüche, bei der die Gewindekante (8) längs einer kontinuierlichen knickfreien Linie verläuft.

5. Betonschraube nach einem der Ansprüche 1 bis 3, bei der die Gewindekante (8) im Einformbereich (4) Ecken (9) aufweist.

6. Betonschraube nach einem der vorhergehenden Ansprüche, bei der die Gewindekante (8) im Einformbereich (4) abschnittsweise geradlinig verläuft.

7. Betonschraube nach einem der Ansprüche 1 bis 3, 5 oder 6, bei der die Gewindekante (8) im Einformbereich Vorsprünge (17) bildet.

8. Betonschraube nach einem der vorhergehenden Ansprüche, bei der der Abstand der Gewindekante (8) von der Längsachse (7) der Schraube während eines Umlaufs zwischen drei und 12 Maxima aufweist.

9. Betonschraube nach einem der vorhergehenden Ansprüche, bei der der Schraubenschaft (2) mindestens in dem Einformbereich (4) einen von der Kreisform abweichenden Querschnitt aufweist, wobei der Abstand der Kontur von der Längsachse (7) der Schraube sich während eines Umlaufs zwischen einem Maximum (11) und einem Minimum ändert.

10. Betonschraube nach einem der vorhergehenden Ansprüche, bei der der Schraubenschaft (2) in dem sich an den Einformbereich (4) anschließenden Abschnitt einen Kreisquerschnitt aufweist.

11. Betonschraube nach Anspruch 9 oder 10, bei der der Abstand der Kontur des Querschnitts des Schraubenschafts (2) von der Längsachse (7) der Schraube im Einformbereich zwischen drei und fünf Maxima aufweist.

12. Betonschraube nach einem der vorhergehenden Ansprüche, bei der die Gewindeflanke (14) des Betongewindes im Einformbereich (4) radiale Stufen (15) aufweist, insbesondere im Bereich der Ecken (9) der Gewindekante (8).
